# EUROPEAN PATENT SPECIFICATION

(11) **EP 2 491 791 B1**
(45) Date of publication and mention of the grant of the patent: **10.12.2014**
(21) Application number: 12153923.3
(22) Date of filing: 03.02.2012
(51) Int. Cl.: A23C 19/068, A01J 11/10, A23C 19/05, A23C 13/12

(54) **Natural cheese with improved melt characteristics**
Natürlicher Käse mit verbesserten Schmelzeigenschaften
Fromage naturel avec caractéristiques améliorées de fusion

(30) Priority: 07.02.2011 US 201161440042 P; 18.11.2011 US 201113299820
(43) Date of publication of application: 29.08.2012
(73) Proprietor: Sargento Foods, Inc., Plymouth WI 53073 (US)
(72) Inventor: Brody, John Kieran, Plymouth, WI Wisconsin 53073 (US)
(74) Representative: Copsey, Timothy Graham

(56) References cited:
- DE-A1- 4 226 849
- DE-C1- 4 143 354
- GB-A- 504 092
- US-A- 3 899 605
- US-A- 5 431 932
- US-B1- 6 358 551
- US-B2- 6 861 080

## Description

### BACKGROUND OF THE INVENTION

Field of the Invention --This invention is related to processing of natural cheese and more particularly to making natural cheese with improved melt characteristics, without the addition of emulsifying salts.

It is known that when natural cheese, for example Cheddar or Swiss, is heated, the cheese has a tendency to become translucent shortly after it has melted. The translucent appearance of the natural cheese is unappetizing and does not have, typically, a satisfying "mouth" feel, i.e. too chewy. In addition, when the natural cheese is melted it has a tendency to oil-off.

Because of the above-described melting problems with natural cheese, consumers have come to use processed cheese when a recipe requires melting. Processed cheese generally does not oil-off upon heating and when melted, takes on a creamy, opaque appearance and has a soft texture that results in considerable "eye appeal" as well as texture preferred by consumers. Processed cheese manufacturing achieves these effects by utilizing emulsifying salts in the presence of heat. When emulsifying salts are used with natural cheese, the resulting product cannot be referred to as a natural cheese anymore.

A preferred cheese product typically is a natural cheese product and therefore a natural cheese product with improved melt characteristics, without the addition of emulsifying salts would be preferred by consumers rather than a processed cheese product.

DE 41 43 354 C1, GB 504 092 A, US 5 431 932 A, DE 42 26 849 A1, US 6 861 080 B2 and US 3 899 605 A disclose various recombinant processes useful for obtaining cheese, wherein the fat stream is subjected to ultrasonic treatment.

### SUMMARY OF THE INVENTION

The disadvantages and limitations of the background art discussed above are overcome by the present disclosure.

There is provided a method for producing a natural cheese with improved melt characteristics from a quantity of raw milk. The method includes separating a cream portion and a reduced fat portion from the raw milk. The cream portion of the raw milk is divided into a first portion and a second portion and depositing the first cream portion into an emulsifying machine. The second cream portion is combined with the reduced fat milk portion. The first cream portion is emulsified in the emulsifying machine using a mild homogenate process to create reduced size fat globules. The reduced fat milk portion is combined with the second cream portion and the emulsified first cream portion into a standardized cheese fluid. The standardized cheese fluid is pasteurized at a predetermined temperature for a predetermined time period and deposited into a cheese vat. The standardized cheese fluid is processed with rennet being added to the fluid in the cheese vat and producing a natural cheese with improved melt characteristics.

Before adding the rennet to the cheese vat, a dilute acid solution is added in a stream slow enough to prevent coagulation of the cheese fluid but setting the pH of the cheese fluid to a predetermined value between the range of 6.0 to 6.8. An example of an acid solution for use in the process is a mixture of citric acid and lactic acid.

There is also provided a method of producing a natural cheese having improved melt characteristics from a quantity of raw milk. The method includes separating the raw milk into a cream portion and a reduced fat milk portion. A portion of the cream portion is emulsified in a machine with a mild homogenate process producing reduced size fat globules. All of the cream portion and the reduced fat milk portion is combined into a cheese fluid and pasteurized. A coagulating agent is added to the cheese fluid and processed to produce a natural cheese having improved melt characteristics from the cheese fluid including the emulsified cream portion.

There is also provided a system for producing a natural cheese having characteristics, upon melting, of not oiling-off, is opaque, and has a soft texture. This system includes a separator configured to receive raw milk and to separate the raw milk into a cream portion and a reduced fat milk portion. An emulsifying machine is configured to receive a portion of the cream portion from the separator, wherein the emulsifying machine is configured to emulsify the cream portion with a mild homogenate mechanism producing reduced size fat globules in the cream. A pasteurizer is configured to pasteurize a cheese fluid comprising the reduced fat milk, the emulsified portion of cream portion and the other cream portion in a cheese vat. The cheese vat is configured to receive the pasteurized cheese fluid and a quantity of coagulating agent, wherein a natural cheese forms having characteristics of not oiling-off, being opaque, and have a soft texture upon melting. The system discloses that the emulsifying machine can be one of a group consisting of a homogenizer, a shear pump, a micro valve apparatus, and an ultrasound device.

### DESCRIPTION OF THE DRAWINGS

These and other advantages of the present invention are best understood with reference to the drawings, in which:

FIG. 1 is a block diagram of an exemplary embodiment of a process for producing a natural cheese with improved melt characteristics.

FIG. 2 is a block diagram illustration of exemplary embodiment of a process for producing natural cheese with improved melt characteristics.

FIG. 3 is a block diagram illustration of exemplary embodiment of a process for producing natural cheese with improved melt characteristics that does not require the standardization process step.

### DETAILED DESCRIPTION OF THE EXEMPLARY EMBODIMENTS

When natural cheese, for example Cheddar or Swiss, is melted it has a tendency to oil-off, and become translucent and have a chewy mouth feel. When a user or recipe requires a melted cheese product, typically a processed cheese is used because a processed cheese typically does not oil-off on heating and takes on a creamy opaque appearance and soft texture because of the melting. Such characteristics are considerably more appealing to a user or consumer. The manufacturers of a processed cheese achieve the effects desired by a consumer by utilizing emulsifying salts in the presence of heat. Emulsifying salts such as sodium citrate, phosphates, and tartrate are used in the manufacture of processed cheese. The emulsifying salts are used to emulsify the milk fats and protein in the cheese milk. However, the use of emulsifying salt is not allowed in the manufacture of natural cheese, therefore an alternative method of making natural cheese with suitable melt characteristics is needed.

This disclosure describes the processes for providing natural cheese with improved melt characteristics without the use of emulsifying salts. These procedures alter the physical structure of a portion of the milk fat used to make the cheese, standardizing the milk to an appropriate fat to protein ratio, and pre-acidifying the milk prior to addition of a coagulating agent, for example rennet.

Milk fat, also known as cream, exists in milk in the form of fat globules. These globules in raw milk typically measure between 1/100 mm to 1/1,000 mm in diameter. Reduction of these globules can occur, without the use of emulsifying salts, by emulsifying a portion of the cream, also referred to as milk fat, and reintroducing the emulsified cream into the cheese milk fluid.

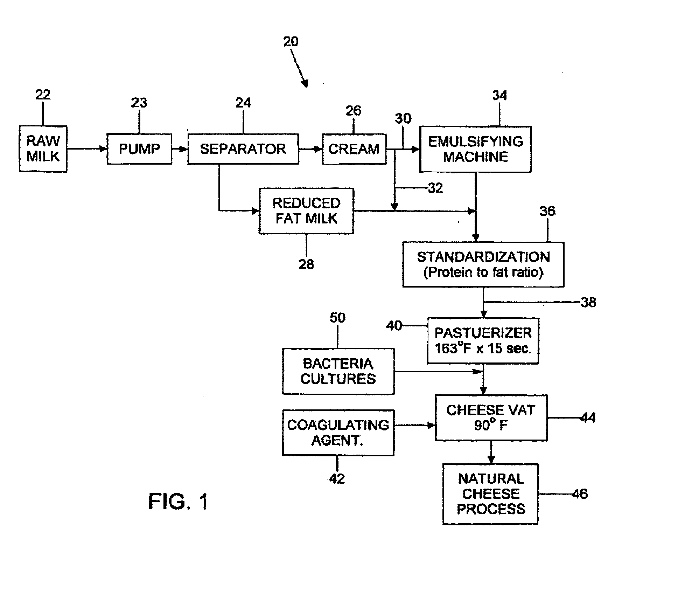

An example of the process includes an amount of raw milk 22 is pumped , by an appropriate pump 23, into a separator device 24. The separator device 24 can be of any conventional and convenient apparatus but configured to separate the cream 26 from the raw milk 22 leaving a reduced fat milk 28. The cream portion 26 of the raw milk 22 is further divided into a first portion 30 and a second portion 32. In each of the examples illustrated in FIGS. 1, 2, and 3 the first portion 30 of the cream portion 26 is approximately 10-50% by weight and the second portion 32 of the cream portion 26 is about 90-50% by weight of the cream portion 26 of the raw milk 22.

In an exemplary embodiment, the first portion 30 of the cream portion 26 is 30% and the second portion 32 of the cream portion 26 is 70%. The first cream portion 30 is deposited into an emulsifying machine 34. The emulsifying machine 34 can be a homogenizer, for example a double stage homogenizer, a shear pump, for exerting shear pressure on the milk fat globules in the first portion of the cream 26, thereby reducing the fat globular size, a micro valve device pumping milk, at a predetermined pressure, through a matrix of small openings to reduce the fat globular size, or an ultrasound device configured to vibrate the raw mild to reduce the size of the fat globules.

An emulsifying machine 34 which is an exemplary homogenizer is described below. The emulsifying machine 34 which is a shear pump can be positioned in a container or an in-line pump. The preferred shear pump is the in-line type pump creating a back pressure of 32 psi on the portion of cream 30 passing through the pump at a flow rate of about 9 gallons per minute. Such shear pump is operating with a rotor-stator gap of 0.5 mm and a rotor speed of 3500 rpm. The emulsifying machine 34 which is a micro-valve is in-line with an adjustable downstream orifice. In a preferred embodiment, the micro-valve has a 1/4" orifice downstream with a back pressure of 3790 kPa (550 psi) exerted on the portion of cream 30 passing through the micro-valve. It should be understood that other settings, such as flow rate, back pressure, orifice size, rotor speed and other variables may be used depending on the type of natural cheese being produced and such settings would be known by one originally skilled in the art of making natural cheese.

In each of the examples illustrated in FIGS. 1, 2, and 3 the emulsifying machine 34 is a homogenizer having two-stage stages that asserts a pressure in the range of 3450 kPa (500 psi) in the first stage and 3450 kPa (500 psi) to 13,8 MPa (2,000 psi) in the second stage. The first portion 30 of cream 26 which is emulsified in the two-stage emulsifying machine 34 has reduced fat globules in the range of approximately 1-2 microns. The purpose of using such low emulsifying pressure is to limit the amount of lipase that may be liberated by the process.

The second portion 32 of the cream 26 (about 70% in the example) is combined with the reduced fat milk portion 28 of the raw milk 22 which in turn is combined with the emulsified first cream portion 30. The reduced fat milk portion 28, second cream portion 32, and emulsified first cream portion 30 are combined into a cheese fluid 38. A standardization process 36 adjusts the protein-to-fat ratio of the cheese fluid 38 and will vary, as is well known in the industry, based on the type of natural cheese being produced. The standardization of the cheese fluid in this disclosure occurs before the pasteurization process.

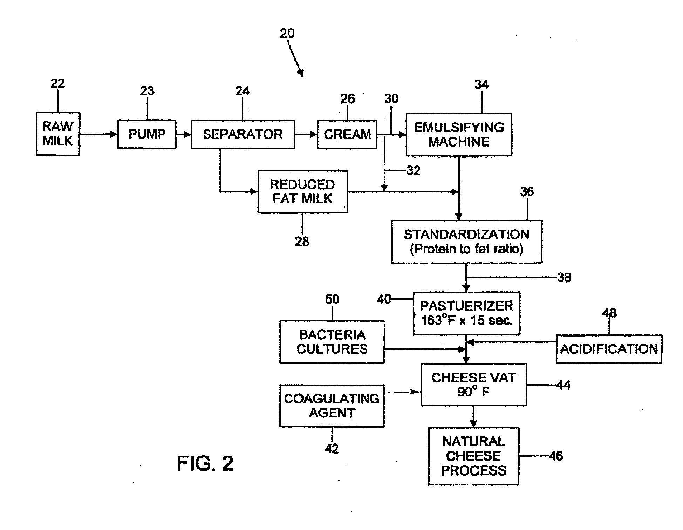

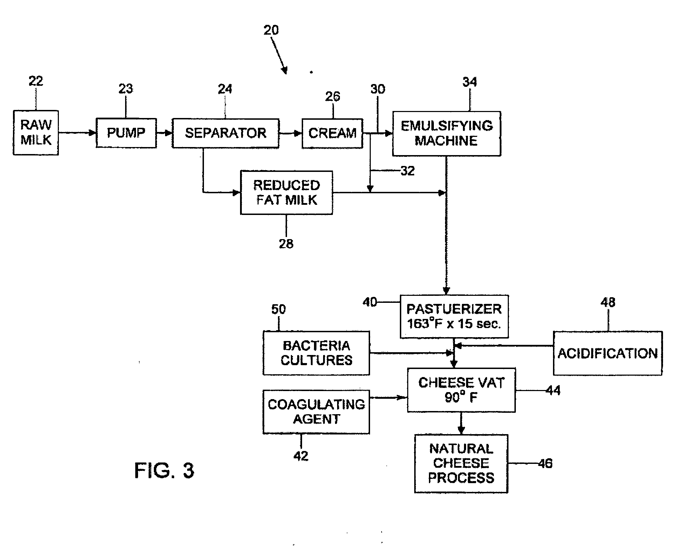

As is known in the art of making natural cheese, standardization of the cheese fluid, before making the cheese is required for some types of natural cheese, but not for other types. For example, low moisture part skim Mozzarella, whole milk Mozzarella, Provolone, Swiss, Gouda, Gruyere, Parmesan, and any other variety of natural cheese that is deemed either reduced or low fat require a standardization process. Natural cheese types that generally do not require standardization are, for example, Cheddar, Monterey Jack, Colby, Pepper Jack, Asiago, Fontina Manchego, and Romano. Other types of natural cheese, not listed above, may not require a standardization process, but one ordinarily skilled in the art of making natural cheese knows when to use a standardization process. It should be understood that the processes 20 described in this disclosure are applicable, with or without the standardization process 36 as determined by the type of natural cheese being produced, to obtain a natural cheese with improved melt characteristics described herein. FIGS. 1 and 2 illustrate processes of making natural cheese that includes a standardization process 36; FIG. 3 illustrates a process of making a natural cheese that does not need the standardization process step.

The purpose of the emulsification of the first portion of the cream, without emulsifying salts, is to prevent a natural cheese from being translucent upon heating. In other words, the natural cheese produced with the disclosed process, upon melting, will obtain an opaque look which is desired by consumers. The cheese fluid 38 is pasteurized in a pasteurizer 40 at a predetermined temperature for a predetermined period. Again, the exact temperature and time periods will vary from time to time to comply with applicable governmental requirements as well as the type of natural cheese being produced and is known by one ordinarily skilled in the art of making natural cheese. In the examples illustrated in FIGS. 1, 2, and 3 the pasteurization occurs at approximately 72,8°C (163° F) for 15 seconds. The pasteurized cheese fluid that may or may not be subject to standardization is deposited in a cheese vat 44 and cooled to approximately 10°C (90° F). As part of the natural cheese making process, bacteria cultures 50 (also known as starter cultures) are added to the cheese vat 44. An appropriate amount of coagulating agent, for example, rennet 42, as determined by the type of natural cheese being produced, is added to the cheese vat 44 and the processing 46 of the cheese fluid proceeds to produce a natural cheese with improved melt characteristics.

Before the rennet 42 and bacteria cultures 50 are added to the cheese fluid 38 and after pasteurization 40, a mild acid in an acidification process 48 is added to the cheese fluid. An acid solution, which includes one or more types of acid, is added to the cheese fluid in a stream slow enough to prevent coagulation. The acid solution can be a combination of citric acid and lactic acid and is added to the cheese vat 44 to adjust the pH of the cheese fluid. It should be understood that the acidification of the cheese fluid occurs for both illustrated processes in FIG. 2 and 3 but the types of mild acids used will vary based on the types of natural cheese being produced by one ordinarily skilled in the art. The types of acid to be used should be a mild, food grade, organic acid, for example citric acid, lactic acid, and acetic acid. It is also known that glucose delta/acetone while when added to milk slowly converts to lactic acid. The preferred acid solution is a mixture of citric and lactic acid. However, it should be understood that one of the listed acids can be used as well as combinations of the listed ingredients in the acidification process 48, as determined by the type of natural cheese being produced as known by one ordinarily skilled in the art.

For example, the acidification results in lowering of the pH of the cheese fluid to a range of about 6.0 to 6.8 with the preferred pH being 6.3. It is found that a pH lower than 6.0 results in a "soupy" cheese product and a pH of more than 6.8 results in an unacceptable "chewy" mouth feel. Such acidification process enables calcium in the cheese matrix to be removed with the whey, causing less bonding in the cheese and has the additional benefit of the use of less rennet. That is why the acidification occurs prior to the addition of rennet to the cheese fluid. The rennet 42 is a proteolytic enzyme that lives on in the cheese and breaks it down over time. The acidification and standardization of the milk used in the cheese making process removes the chewiness associated with melting natural cheese.

The resulting natural cheese melts with similar properties to those of processed cheese but without the use of emulsifying salts, thereby yielding favorable "eye appeal" and "mouth feel". The natural cheese will also better maintain these attractive properties as it ages since it is made with less rennet.

It should be understood that the various temperatures, acid amounts and types, rennet amounts, pasteurization time and temperatures, and homogenization process, will vary with respect to the type of raw milk and type of natural cheese being produced from such raw milk.

The processes described herein result in a natural cheese that has a smooth creamy melt without the oiling-off typically associated with traditional natural cheese. The natural cheese maintains an opaque appearance similar to processed cheese upon melting and such characteristics are produced without the use of emulsifying salts. As a further benefit of the processes described herein, since less rennet is used or required for manufacturing of the natural cheese, there is a reduced rate of proteolysis over time which results in more consistent texture over shelf life. The use of less rennet also is a cost saving in the manufacture of the natural cheese being produced. A further characteristic of the natural cheese produced with the processes described herein is that the cheese retains the stretch of natural cheese. The stretch of natural cheese is also a desirable characteristic that typically is not exhibited by a processed cheese.

Although the foregoing description of the present processes has been shown and described with reference to particular embodiments and applications thereof, it has been presented for purposes of illustration and description and is not intended to be exhaustive or to limit the disclosure to the particular embodiments and applications disclosed.

## Claims

1. A method of producing natural cheese with improved melt characteristics from a quantity of raw milk, the method comprising:
separating a cream portion and a reduced fat milk portion from the raw milk;
dividing the cream portion into a first portion and a second portion;
depositing the first cream portion into an emulsifying device;
combining the second cream portion with the reduced fat milk portion;
emulsifying the first cream portion in the emulsifying device with a mild homogenate process creating reduced size fat globules;
combining the reduced fat milk portion, the second cream portion and the emulsified first cream portion into a standardized cheese fluid;
pasteurizing the standardized cheese fluid at a predetermined temperature for a predetermined time period;
depositing the pasteurized standardized cheese fluid into a cheese vat;
adding a dilute acid solution, in a stream slow enough to prevent coagulation, to the combined standardized cheese fluid in the cheese vat until the pH of the cheese fluid is at a pre-determined value; and
adding coagulating agent to the cheese vat and processing the standardized cheese fluid.

2. The method of producing natural cheese with improved melt characteristics of Claim 1, wherein the pH of the cheese fluid is in a range of 6.0 to 6.8, preferably 6.3.

3. The method of producing natural cheese with improved melt characteristics of Claim 1, wherein the acid solution is a mixture of citric acid and lactic acid.

4. The method of producing natural cheese with improved melt characteristics of Claim 1, the first cream portion is about 30% of the cream portion and the second cream portion is about 70% of the cream portion.

5. The method of producing natural cheese with improved melt characteristics of Claim 1, wherein the mild homogenate process is a two stage process with one stage providing a pressure in the range of 500 psi and another stage providing a pressure in the range of 3,45 MPa (500 psi) to 13.8 MPa (2000 psi).

6. The method of producing natural cheese with improved melt characteristics of Claim 1, wherein the coagulating agent is rennet.

7. The method of producing natural cheese with improved melt characteristics of Claim 1, wherein the device is one of a group consisting of a homogenizer, a shear pump, a micro valve apparatus, and an ultrasound device.

8. The method of producing natural cheese with improved melt characteristics of Claim 1, wherein the emulsifying device is a homogenizer having a two stage process with one stage providing a pressure in the range of 3.45 MPa (500 psi) and another stage providing a pressure in the range of 3.45 MPa (500 psi) to 13.8 MPa (2000 psi).

9. A natural cheese with improved melt characteristics obtainable by the process of Claim 1.

10. A system for carrying out the process of claim 1, the system comprising:
a separator configured to receive raw milk and separate the raw milk into a cream portion and a reduced fat milk portion;
an emulsifying machine configured to receive a portion of the cream portion from the separator, wherein the emulsifying machine is configured to emulsify the portion of cream portion with a mild homogenate mechanism producing reduced size fat globules in the cream;
a pasteurizer configured to pasteurize a cheese fluid comprising the reduced fat milk, the emulsified portion of the cream portion, and the other cream portion; and
a cheese vat configured to receive the pasteurized cheese fluid, a dilute acid solution added to the pasteurized cheese fluid in a stream slow enough to prevent coagulation to bring the pH of the pasteurized cheese fluid to a pre-determined value, and a quantity of coagulating agent, wherein a natural cheese forms having characteristics of not oiling-off, being opaque, and a soft texture upon melting is produced.

11. The system for producing a natural cheese having characteristics, upon melting, of not oiling-off, is opaque, and has a soft texture of Claim 10, wherein the emulsifying machine is one of a group consisting of a homogenizer, a shear pump, a micro valve apparatus, and an ultrasound device.

12. The system for producing a natural cheese having characteristics, upon melting, of not oiling-off, is opaque, and has a soft texture of Claim 10, wherein the pH of the cheese fluid is in a range of 6.0 to 6.8, preferably 6.3.

13. The system for producing a natural cheese having characteristics, upon melting, of not oiling-off, is opaque, and has a soft texture of Claim 10, wherein the acid solution is a mixture of citric acid and lactic acid.

14. The system for producing a natural cheese having characteristics, upon melting, of not oiling-off, is opaque, and has a soft texture of Claim 10, wherein the emulsified portion of the cream portion is about 30% of the cream portion and the other cream portion is about 70% of the cream portion.

15. The system for producing a natural cheese having characteristics, upon melting, of not oiling-off, is opaque, and has a soft texture of Claim 10, wherein the coagulating agent is rennet.

## Patentansprüche

1. Verfahren zur Erzeugung von natürlichem Käse mit verbesserten Schmelzeigenschaften aus einer Menge an Rohmilch, welches Verfahren umfasst:
Abtrennen eines Rahmanteils und eines Milchanteils mit reduziertem Fettgehalt aus der Rohmilch;
Aufteilen des Rahmanteils in einen ersten Anteil und einen zweiten Anteil;
Deponieren des ersten Rahmanteils in einer Emulgiervorrichtung;
Kombinieren des zweiten Rahmanteils mit dem Milchanteil mit reduziertem Fettgehalt;
Emulgieren des ersten Rahmanteils in der Emulgiervorrichtung mittels eines milden Homogenisierprozesses, welcher Fettkügelchen von reduzierter Größe erzeugt;
Kombinieren des Milchanteils mit reduziertem Fettgehalt, des zweiten Rahmanteils und des emulgierten ersten Rahmanteils zu einer standardisierten Käseflüssigkeit;
Pasteurisieren der standardisierten Käseflüssigkeit bei einer zuvor festgelegten Temperatur für einen zuvor festgelegten Zeitraum;
Einbringen der pasteurisierten standardisierten Käseflüssigkeit in einen Käsebottich;
Zugeben einer verdünnten Säurelösung, in einem Strom, der langsam genug zur Vermeidung von Gerinnung ist, zu der kombinierten standardisierten Käseflüssigkeit in dem Käsebottich, bis der pH-Wert der Käseflüssigkeit einen zuvor bestimmten Wert erreicht; und
Zugeben von Gerinnungsmittel zu dem Käsebottich und Verarbeiten der standardisierten Käseflüssigkeit.

2. Verfahren zur Erzeugung von natürlichem Käse mit verbesserten Schmelzeigenschaften gemäß Anspruch 1, wobei der pH-Wert der Käseflüssigkeit in einem Bereich von 6,0 bis 6,8, vorzugsweise bei 6,3, liegt.

3. Verfahren zur Erzeugung von natürlichem Käse mit verbesserten Schmelzeigenschaften gemäß Anspruch 1, wobei die Säurelösung ein Gemisch aus Zitronensäure und Milchsäure ist.

4. Verfahren zur Erzeugung von natürlichem Käse mit verbesserten Schmelzeigenschaften gemäß Anspruch 1, wobei der erste Rahmanteil etwa 30% des Rahmanteils ausmacht und der zweite Rahmanteil etwa 70% des Rahmanteils ausmacht.

5. Verfahren zur Erzeugung von natürlichem Käse mit verbesserten Schmelzeigenschaften gemäß Anspruch 1, wobei der milde Homogenisierprozess ein zweistufiger Prozess ist, wobei eine Stufe einen Druck im Bereich von 3,45 MPa (500 psi) liefert und eine andere Stufe einen Druck im Bereich von 3,45 MPa (500 psi) bis 13,8 MPa (2000 psi) liefert.

6. Verfahren zur Erzeugung von natürlichem Käse mit verbesserten Schmelzeigenschaften gemäß Anspruch 1, wobei das Gerinnungsmittel Lab ist.

7. Verfahren zur Erzeugung von natürlichem Käse mit verbesserten Schmelzeigenschaften gemäß Anspruch 1, wobei die Vorrichtung eine aus einer Gruppe ist, bestehend aus einem Homogenisator, einer Scherpumpe, einem Mikroventilapparat und einem Ultraschallgerät.

8. Verfahren zur Erzeugung von natürlichem Käse mit verbesserten Schmelzeigenschaften gemäß Anspruch 1, wobei die Emulgiervorrichtung ein Homogenisator mit einem zweistufigen Prozess ist, wobei eine Stufe einen Druck im Bereich von 3,45 MPa (500 psi) liefert und eine andere Stufe einen Druck im Bereich von 3,45 MPa (500 psi) bis 13,8 MPa (2000 psi) liefert.

9. Natürlicher Käse mit verbesserten Schmelzeigenschaften, erzeugbar durch den Prozess gemäß Anspruch 1.

10. System zur Durchführung des Prozesses gemäß Anspruch 1, welches System umfasst:
einen Separator, der zum Empfangen von Rohmilch und zum Trennen der Rohmilch in einen Rahmanteil und einen Milchanteil mit reduziertem Fettgehalt ausgelegt ist;
eine Emulgiermaschine, die zum Empfangen eines Anteils des Rahmanteils aus dem Separator ausgelegt ist, wobei die Emulgiermaschine zum Emulgieren des Anteils des Rahmanteils mittels eines milden Homogenisiermechanismus, der Fettkügelchen von reduzierter Größe im Rahm erzeugt, ausgelegt ist;
einen Pasteurisator, der zum Pasteurisieren einer Käseflüssigkeit, umfassend die Milch mit reduziertem Fettgehalt, den emulgierten Anteil des Rahmanteils und den anderen Rahmanteil, ausgelegt ist; und
einen Käsebottich, der zum Aufnehmen der pasteurisierten Käseflüssigkeit, einer verdünnten Säurelösung, die der pasteurisierten Käseflüssigkeit in einem Strom zugegeben wird, der langsam genug zur Vermeidung von Gerinnung ist, um den pH-Wert der pasteurisierten Käseflüssigkeit auf einen zuvor bestimmten Wert zu bringen, und einer Menge an Gerinnungsmittel ausgelegt ist, wobei ein natürlicher Käse, der Eigenschaften wie Nicht-Ausölen, opakes Aussehen und weiche Textur beim Schmelzen ausbildet, erzeugt wird.

11. System zur Erzeugung von natürlichem Käse, der auf Schmelzung hin Eigenschaften wie Nicht-Ausölen, opakes Aussehen und weiche Textur aufweist, gemäß Anspruch 10, wobei die Emulgiermaschine eine aus einer Gruppe ist, bestehend aus einem Homogenisator, einer Scherpumpe, einem Mikroventilapparat und einem Ultraschallgerät.

12. System zur Erzeugung von natürlichem Käse, der auf Schmelzung hin Eigenschaften wie Nicht-Ausölen, opakes Aussehen und weiche Textur aufweist, gemäß Anspruch 10, wobei der pH-Wert der Käseflüssigkeit in einem Bereich von 6,0 bis 6,8, vorzugsweise bei 6,3, liegt.

13. System zur Erzeugung von natürlichem Käse, der auf Schmelzung hin Eigenschaften wie Nicht-Ausölen, opakes Aussehen und weiche Textur aufweist, gemäß Anspruch 10, wobei die Säurelösung ein Gemisch aus Zitronensäure und Milchsäure ist.

14. System zur Erzeugung von natürlichem Käse, der auf Schmelzung hin Eigenschaften wie Nicht-Ausölen, opakes Aussehen und weiche Textur aufweist, gemäß Anspruch 10, wobei der emulgierte Anteil des Rahmanteils etwa 30% des Rahmanteils ausmacht und der andere Rahmanteil etwa 70% des Rahmanteils ausmacht.

15. System zur Erzeugung von natürlichem Käse, der auf Schmelzung hin Eigenschaften wie Nicht-Ausölen, opakes Aussehen und weiche Textur aufweist, gemäß Anspruch 10, wobei das Gerinnungsmittel Lab ist.

## Revendications

1. Procédé de production de fromage naturel avec des caractéristiques améliorées de fusion à partir d'une quantité de lait cru, le procédé comprenant :
la séparation d'une portion de crème et d'une portion de lait à teneur réduite en matières grasses à partir du lait cru ;
la division de la portion de crème en une première portion et une deuxième portion ;
le dépôt de la première portion de crème dans un dispositif d'émulsification ;
la combinaison de la deuxième portion de crème avec la portion de lait à teneur réduite en matières grasses ;
l'émulsification de la première portion de crème dans le dispositif d'émulsification avec un procédé d'homogénéisation légère créant des globules de matières grasses de taille réduite ;
la combinaison de la portion de lait à teneur réduite en matières grasses, la deuxième portion de crème et la première portion de crème émulsifiée en un fluide de fromage standardisé ;
la pasteurisation du fluide de fromage standardisé à une température prédéterminée pendant une période de temps prédéterminée ;
le dépôt du fluide de fromage standardisé pasteurisé dans un moule à fromage ;
l'ajout d'une solution d'acide dilué, dans un flux suffisamment lent pour empêcher toute coagulation, au fluide de fromage standardisé combiné dans le moule à fromage jusqu'à ce que le pH du fluide de fromage soit à une valeur prédéterminée ; et
l'ajout d'un agent coagulant au moule à fromage et le traitement du fluide de fromage standardisé.

2. Procédé de production de fromage naturel avec des caractéristiques améliorées de fusion selon la revendication 1, dans lequel le pH du fluide de fromage est dans une plage de 6.0 à 6.8, de préférence 6.3.

3. Procédé de production de fromage naturel avec des caractéristiques améliorées de fusion selon la revendication 1, dans lequel la solution d'acide est un mélange d'acide citrique et d'acide lactique.

4. Procédé de production de fromage naturel avec des caractéristiques améliorées de fusion selon la revendication 1, dans lequel la première portion de crème représente environ 30 % de la portion de crème et la deuxième portion de crème représente environ 70 % de la portion de crème.

5. Procédé de production de fromage naturel avec des caractéristiques améliorées de fusion selon la revendication 1, dans lequel le procédé d'homogénéisation légère est un procédé à deux étapes avec une étape fournissant une pression dans la plage de 500 psi et un autre étape fournissant une pression dans la plage de 3,45 MPa (500 psi) à 13,8 MPa (2000 psi).

6. Procédé de production de fromage naturel avec des caractéristiques améliorées de fusion selon la revendication 1, dans lequel l'agent coagulant est de la présure.

7. Procédé de production de fromage naturel avec des caractéristiques améliorées de fusion selon la revendication 1, dans lequel le dispositif est l'un d'un groupe se composant d'un homogénéisateur, d'une pompe à cisaillement, d'un appareil à micro-vanne et d'un dispositif ultrasonore.

8. Procédé de production de fromage naturel avec des caractéristiques améliorées de fusion selon la revendication 1, dans lequel le dispositif d'émulsification est un homogénéisateur comportant un procédé à deux étapes avec une étape fournissant une pression dans la plage de 3,45 MPa (500 psi) et une autre étape fournissant une pression dans la plage de 3,45 MPa (500 psi) à 13,8 MPa (2000 psi).

9. Fromage naturel avec des caractéristiques améliorées de fusion pouvant être obtenu par le procédé selon la revendication 1.

10. Système pour effectuer le procédé selon la revendication 1, le système comprenant :
un séparateur configuré pour recevoir du lait cru et pour séparer le lait cru en une portion de crème et une portion de lait à teneur réduite en matières grasses ;
une machine d'émulsification configurée pour recevoir une portion de la portion de crème à partir du séparateur, dans lequel la machine d'émulsification est configurée pour émulsifier la portion de la portion de crème avec un mécanisme d'homogénéisation légère produisant des globules de matières grasses de taille réduite dans la crème ;
un pasteurisateur configuré pour pasteuriser un fluide de fromage comprenant le lait à teneur réduite en matières grasses, la portion émulsifiée de la portion de crème, et l'autre portion de crème ; et
un moule à fromage configuré pour recevoir le fluide de fromage pasteurisé, une solution d'acide dilué ajoutée au fluide de fromage pasteurisé dans un flux suffisamment lent pour empêcher toute coagulation pour amener le pH du fluide de fromage pasteurisé à une valeur prédéterminée, et une quantité d'agent coagulant, dans lequel il est produit un fromage naturel présentant des caractéristiques, lors de la fusion, d'absence d'exsudation de matières grasses, étant opaque et ayant une texture souple.

11. Système de production d'un fromage naturel présentant des caractéristiques, lors de la fusion, d'absence d'exsudation de matières grasses, étant opaque et ayant une texture souple selon la revendication 10, dans lequel la machine d'émulsification est l'un d'un groupe se composant d'un homogénéisateur, d'une pompe à cisaillement, d'un appareil à micro-vanne et d'un dispositif ultrasonore.

12. Système de production d'un fromage naturel présentant des caractéristiques, lors de la fusion, d'absence d'exsudation de matières grasses, étant opaque et ayant une texture souple selon la revendication 10, dans lequel le pH du fluide de fromage est dans une plage de 6.0 à 6.8, de préférence 6.3.

13. Système de production d'un fromage naturel présentant des caractéristiques, lors de la fusion, d'absence d'exsudation de matières grasses, étant opaque et ayant une texture souple selon la revendication 10, dans lequel la solution d'acide est un mélange d'acide citrique et d'acide lactique.

14. Système de production d'un fromage naturel présentant des caractéristiques, lors de la fusion, d'absence d'exsudation de matières grasses, étant opaque et ayant une texture souple selon la revendication 10, dans lequel la portion émulsifiée de la portion de crème représente environ 30 % de la portion de crème et l'autre portion de crème représente environ 70 % de la portion de crème.

15. Système de production d'un fromage naturel présentant des caractéristiques, lors de la fusion, d'absence d'exsudation de matières grasses, étant opaque et ayant une texture souple selon la revendication 10, dans lequel l'agent coagulant est de la présure.
